# EUROPEAN PATENT APPLICATION

(11) **EP 4 560 666 A1**
(43) Date of publication of application: **28.05.2025**
(21) Application number: 24209168.4
(22) Date of filing: 28.10.2024
(51) Int. Cl.: H01G 4/12, H01G 4/012, H01G 4/232, H01G 4/30

(54) **MULTILAYER ELECTRONIC COMPONENT**

(30) Priority: 21.11.2023 KR 20230162516
(71) Applicant: Samsung Electro-Mechanics Co., Ltd., Suwon-si, Gyeonggi-do (KR)
(72) Inventor: Kim, Jong Hoon, Suwon-si, Gyeonggi-do (KR); Han, Byung Woo, Suwon-si, Gyeonggi-do (KR); Kang, Sim Chung, Suwon-si, Gyeonggi-do (KR); Kim, Chang Su, Suwon-si, Gyeonggi-do (KR); Kang, Yeon Song, Suwon-si, Gyeonggi-do (KR); Lee, Sang Hyuk, Suwon-si, Gyeonggi-do (KR); Lee, Seung Jun, Suwon-si, Gyeonggi-do (KR)
(74) Representative: Grünecker Patent- und Rechtsanwälte PartG mbB

(57) **Abstract**

A multilayer electronic component includes a body including a dielectric layer and a plurality of internal electrodes, and external electrodes. The internal electrodes each include a main portion and a lead-out portion extending from the main portion and having a connection terminal in contact with a corresponding one of the external electrodes. A width of the lead-out portion gradually decreases from the main portion to the connection terminal. The main portion includes a first saddle portion disposed on an end portion spaced apart from the lead-out portion, and the lead-out portion includes a second saddle portion disposed on a side end portion. Thicknesses of the first and second saddle portions are greater than a thickness of a central portion of the main portion. The lead-out portion of one internal electrode has an overlap region overlapping the main portion of a neighboring internal electrode among the plurality of internal electrodes.

## Description

### CROSS-REFERENCE TO RELATED APPLICATION(S)

This application claims benefit of priority to Korean Patent Application No. 10-2023-0162516 filed on November 21, 2023 in the Korean Intellectual Property Office, the disclosure of which is incorporated herein by reference in its entirety.

### TECHNICAL FIELD

The present disclosure relates to a multilayer electronic component.

### BACKGROUND

A multilayer ceramic component (MLCC), a multilayer electronic component, may be a chip condenser mounted on the printed circuit boards of various electronic products including image display devices such as a liquid crystal display (LCD) and a plasma display panel (PDP), a computer, a smartphone, a mobile phone, or the like, and charging or discharging electricity therein or therefrom. Such a multilayer ceramic capacitor may be used as a component of various electronic devices, since a multilayer ceramic capacitor may have a small size and high capacitance and may be easily mounted.

Generally, a body of a multilayer ceramic component may have a structure in which dielectric layers and internal electrodes are alternately disposed. Meanwhile, insulation breakdown voltage (BDV) of a multilayer ceramic component may be proportional to a thickness of the dielectric layer. Accordingly, it may be important to reduce a thickness of the dielectric layer to improve capacitance of the multilayer ceramic component and to configure a thickness of the dielectric layer to be uniform to improve distribution of insulation breakdown voltage.

When forming an internal electrode pattern by printing conductive paste for an internal electrode, edges of an internal electrode pattern may have a saddle shape having a thickness greater than that of other portions of the internal electrode pattern.

In this case, when ends of the internal electrode pattern overlap each other in the lamination direction, a thickness of the dielectric layer may locally reduce in the region, such that distribution of insulation breakdown voltage of the multilayer ceramic component may become nonuniform.

In particular, to improve moisture resistance reliability of the multilayer ceramic component, when an internal electrode has a lead-out portion in contact with the external electrode, which has a bottleneck structure with a relatively narrow width, it may be necessary to prevent the ends of the internal electrode pattern from overlapping each other in the lamination direction.

### SUMMARY

An embodiment of the present disclosure is to provide a multilayer electronic component having improved reliability.

According to an embodiment of the present disclosure, a multilayer electronic component includes a body including a dielectric layer and a plurality of internal electrodes disposed alternately with the dielectric layer in a first direction, and including a first surface and a second surface opposing each other in the first direction, a third surface and a fourth surface connected to the first and second surfaces and opposing each other in a second direction, and a fifth surface and a sixth surface connected to the first to the fourth surfaces and opposing each other in a third direction; and external electrodes disposed on the third and fourth surfaces, in which the plurality of internal electrodes each include a main portion and a lead-out portion extending from the main portion toward the third surface or the fourth surface and having a connection terminal in contact with a corresponding one of the external electrodes, a width of the lead-out portion in a third direction gradually decreases from the main portion to the connection terminal, the main portion includes a first saddle portion disposed on an end portion spaced apart from the lead-out portion, and the lead-out portion includes a second saddle portion disposed on a side end portion in the third direction, thicknesses of the first and second saddle portions in the first direction are greater than a thickness of a central portion in the second direction of the main portion, and the lead-out portion of one internal electrode has an overlap region overlapping the main portion of a neighboring internal electrode among the plurality of internal electrodes in the first direction.

According to another embodiment of the present disclosure, a multilayer electronic component includes a body including a dielectric layer and a plurality of internal electrodes disposed alternately with the dielectric layer in a first direction, and including a first surface and a second surface opposing each other in the first direction, a third surface and a fourth surface connected to the first and second surfaces and opposing each other in a second direction, and a fifth surface and a sixth surface connected to the first to the fourth surfaces and opposing each other in a third direction; and external electrodes disposed on the third and fourth surfaces, in which the plurality of internal electrodes each include a main portion and a lead-out portion extending from the main portion toward the third or fourth surface and having a connection terminal in contact with a corresponding one of the external electrodes, a width of the lead-out portion in the third direction gradually decreases from the main portion to the connection terminal, the lead-out portion of one internal electrode has an overlap region overlapping the main portion of a neighboring internal electrode among the plurality of internal electrodes in the first direction, and, when a width of the connection terminal in the third direction is defined as W1 and a width of the main portion in the third direction is defined as W2, W1/W2 is 0.4 or higher and 0.75 or lower.

### BRIEF DESCRIPTION OF DRAWINGS

The above and other aspects, features, and advantages of the present disclosure will be more clearly understood from the following detailed description, taken in combination with the accompanying drawings, in which:
FIG. 1 is a perspective diagram illustrating a multilayer electronic component according to an embodiment of the present disclosure;
FIG. 2 is a cross-sectional diagram taken along line I-I' in FIG. 1;
FIG. 3 is a cross-sectional diagram taken along line II-II' in FIG. 1;
FIG. 4A is a plan diagram illustrating a first internal electrode according to an embodiment of the present disclosure;
FIG. 4B is a plan diagram illustrating a second internal electrode according to an embodiment of the present disclosure;
FIG. 4C is a plan diagram illustrating a state in which a first internal electrode and a second internal electrode overlap each other according to an embodiment of the present disclosure;
FIG. 5 is an enlarged diagram illustrating a K1 region in FIG. 4C;
FIG. 6 is a cross-sectional diagram taken along line III-III' in FIG. 1;
FIG. 7 is an enlarged diagram illustrating region K2 in FIG. 6;
FIG. 8 is a plan diagram illustrating a ceramic green sheet for manufacturing a multilayer electronic component, on which an internal electrode pattern is printed, according to an embodiment of the present disclosure;
FIG. 9 is a plan diagram illustrating a state in which a first internal electrode and a second internal electrode overlap each other in a comparative example, corresponding to FIG. 4C; and
FIG. 10 is a cross-sectional diagram illustrating a comparative example, corresponding to FIG. 6.

### DETAILED DESCRIPTION

Hereinafter, embodiments of the present disclosure will be described as below with reference to the accompanying drawings.

These embodiments are described in sufficient detail to enable those skilled in the art to practice the invention. It is to be understood that the various embodiments of the invention, although different, are not necessarily mutually exclusive. For example, structures, shapes, and sizes described as examples in embodiments in the present disclosure may be implemented in another embodiment without departing from the spirit and scope of the present disclosure. Further, modifications of positions or arrangements of elements in embodiments may be made without departing from the spirit and scope of the present disclosure. The following detailed description is, accordingly, not to be taken in a limiting sense, and the scope of the present disclosure are defined only by appended claims, appropriately interpreted, along with the full range of equivalents to which the claims are entitled.

In the drawings, same elements will be indicated by same reference numerals. Also, redundant descriptions and detailed descriptions of known functions and elements which may unnecessarily make the gist of the present disclosure obscure will be omitted. In the accompanying drawings, some elements may be exaggerated, omitted or briefly illustrated, and the sizes of the elements do not necessarily reflect the actual sizes of these elements. The terms, "include," "comprise," "is configured to," or the like of the description are used to indicate the presence of features, numbers, steps, operations, elements, portions or combination thereof, and do not exclude the possibilities of combination or addition of one or more features, numbers, steps, operations, elements, portions or combination thereof.

In the drawings, the first direction may be defined as a thickness (T) direction, the second direction may be defined as a length (L) direction, and the third direction may be defined as a width (W) direction.

### Multilayer Electronic Component

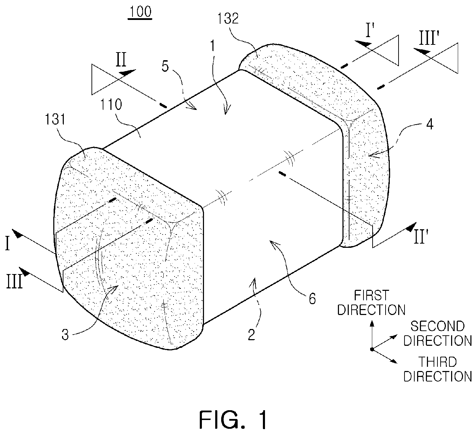

FIG. 1 is a perspective diagram illustrating a multilayer electronic component according to an embodiment.

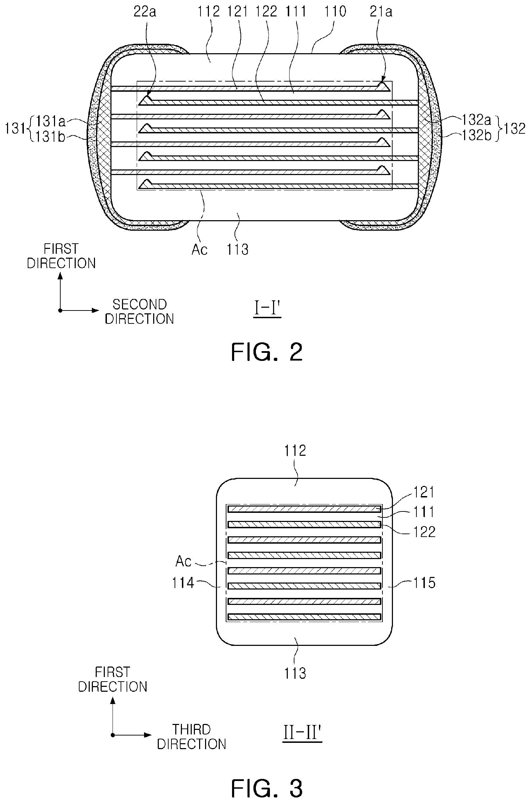

FIG. 2 is a cross-sectional diagram taken along line I-I' in FIG. 1.
FIG. 3 is a cross-sectional diagram taken along line II-II' in FIG. 1.

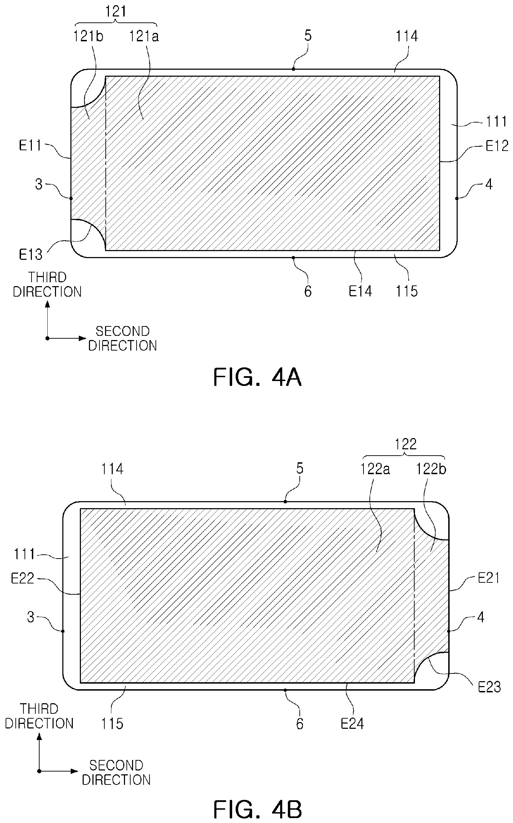

FIG. 4A is a plan diagram illustrating a first internal electrode according to an embodiment;
FIG. 4B is a plan diagram illustrating a second internal electrode according to an embodiment;

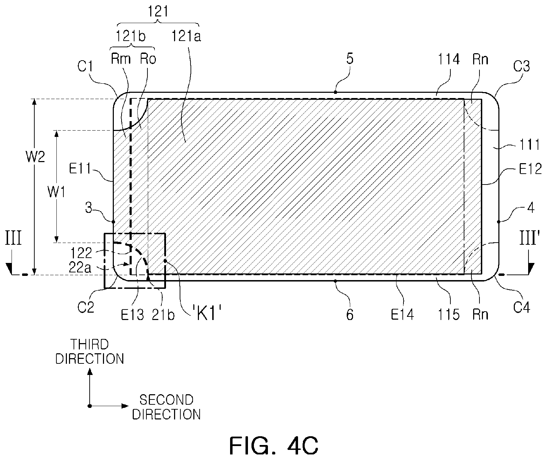

FIG. 4C is a plan diagram illustrating a state in which a first internal electrode and a second internal electrode overlap each other according to an embodiment;

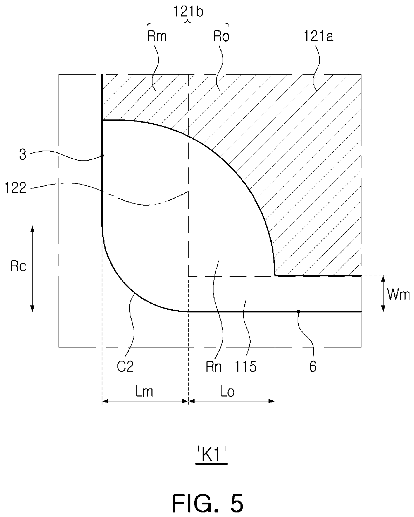

FIG. 5 is an enlarged diagram illustrating a K1 region in FIG. 4C;

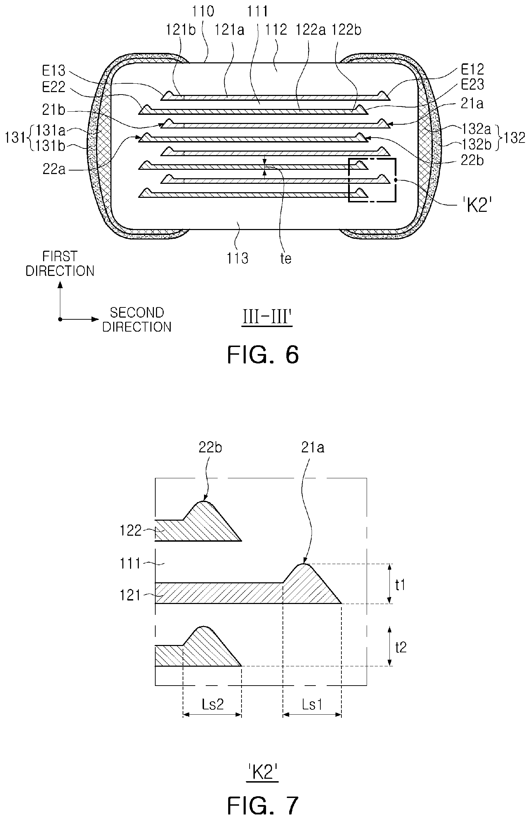

FIG. 6 is a cross-sectional diagram taken along line III-III' in FIG. 1;
FIG. 7 is an enlarged diagram illustrating region K2 in FIG. 6;

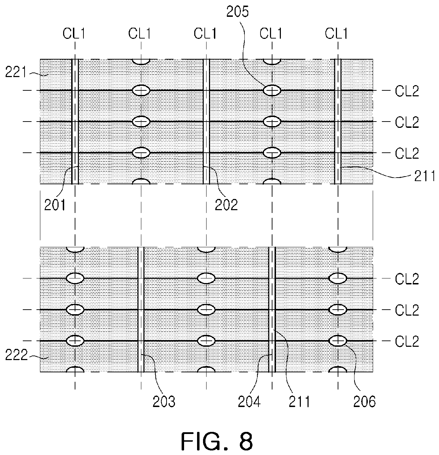

FIG. 8 is a plan diagram illustrating a ceramic green sheet for manufacturing a multilayer electronic component, on which an internal electrode pattern is printed, according to an embodiment;

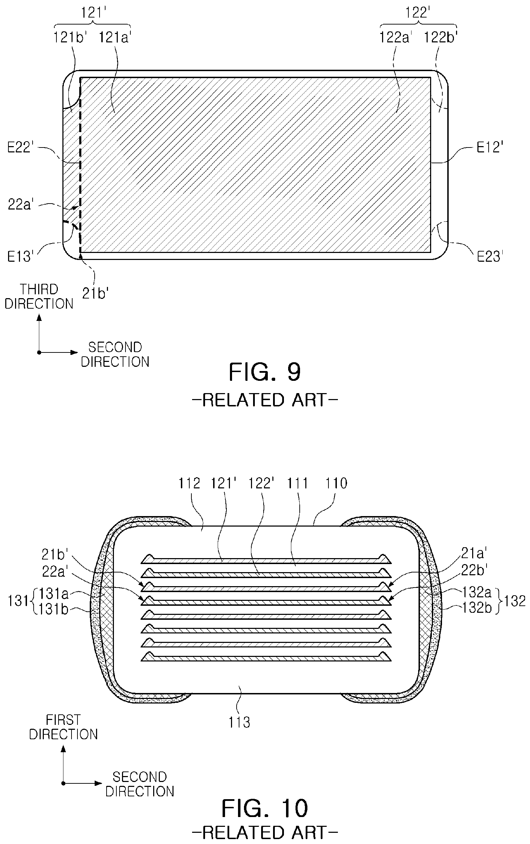

FIG. 9 is a plan diagram illustrating a state in which a first internal electrode and a second internal electrode overlap each other in a comparative example, corresponding to FIG. 4C; and
FIG. 10 is a cross-sectional diagram illustrating a comparative example, corresponding to FIG. 6.

Hereinafter, a multilayer electronic component according to an embodiment will be described in greater detail with reference to FIGS. 1 to 10. A multilayer ceramic capacitor will be described as an example of a multilayer electronic component, but an embodiment thereof is not limited thereto, and the multilayer ceramic capacitor may be applied to various multilayer electronic components, such as an inductor, a piezoelectric element, a varistor, or a thermistor.

Referring to FIGS. 1 to 3, the multilayer electronic component 100 according to an embodiment may include a body 110 including a dielectric layer 111 and internal electrodes 121 and 122, and external electrodes 131 and 132.

The shape of the body 110 may not be limited to any particular shape, but as illustrated, the body 110 may have a hexahedral shape or a shape similar to a hexahedral shape. Due to polishing process of corners of the body, the body 110 may not have an exactly hexahedral shape formed by linear lines but may have a substantially hexahedral shape.

The body 110 may have first and second surfaces 1 and 2 opposing each other in the first direction, third and fourth surfaces 3 and 4 connected to the first and second surfaces 1 and 2 and opposing in the second direction, and fifth and sixth surfaces 5 and 6 connected to the first and second surfaces 1 and 2 and the third and fourth surfaces 3 and 4 and opposing each other in the third direction.

The body 110 may include the dielectric layer 111 and the first and second internal electrodes 121 and 122 disposed alternately in the first direction with the dielectric layer 111 interposed therebetween. The plurality of dielectric layers 111 forming the body 110 may be in a sintered state, and boundaries between adjacent dielectric layers 111 may be integrated with each other such that boundaries therebetween may not be distinct without using a scanning electron microscope (SEM).

The dielectric layer 111 may include, for example, a perovskite-type compound represented by ABO₃ as a main component. A perovskite compound represented by ABO₃ may include, for example, BaTiO₃, (Ba₁₋ₓCaₓ)TiO₃ (0<x<1), Ba(Ti₁-_{y}Ca_{y}) O₃ (0<y<1), (Ba₁₋ₓCaₓ) (Ti_{1-y}Zr_{y}) O₃ (0<x<1, 0<y<1) or Ba(Ti_{1-y}Zr_{y}) O₃ (0<y<1).

The internal electrodes 121 and 122 may include, for example, a first internal electrodes 121 and a second internal electrode 122 disposed alternately with the dielectric layer 111 interposed therebetween. That is, the first internal electrodes 121 and the second internal electrode 122, a pair of electrodes having different polarities, may be disposed to oppose each other with the dielectric layer 111 interposed therebetween. The first internal electrodes 121 and the second internal electrode 122 may be electrically separated from each other by the dielectric layer 111 interposed therebetween.

The first internal electrode 121 may be spaced apart from the fourth surface 4 and may be connected to the first external electrode 131 on the third surface 3. The second internal electrode 122 may be spaced apart from the third surface 3 and may be connected to the second external electrode 132 on the fourth surface 4.

The conductive metal included in the internal electrodes 121 and 122 may be one or more of Ni, Cu, Pd, Ag, Au, Pt, Sn, W, Ti and alloys thereof, and may include Ni more preferably, but an embodiment thereof is not limited thereto.

The body 110 may include a capacitance formation portion Ac disposed in the body 110 and including the first and second internal electrodes 121 and 122 disposed alternately with the dielectric layer 111 interposed therebetween, and a first cover portion 112 and a second cover portion 113 disposed on both surfaces of the capacitance formation portion Ac opposing each other in the first direction.

The body 110 may include a first margin portion 114 and a second margin portion 115 disposed on both surfaces of the capacitance formation portion Ac opposing each other in the third direction. In other words, the margin portions 114 and 115 may indicate a region between both ends of the internal electrodes 121 and 122 and the boundary surface of the body 110 in a cross-section of the body 110 taken in the first and third directions.

The cover portions 112 and 113 and the margin portions 114 and 115 may prevent damages to the internal electrode due to physical or chemical stress. The cover portions 112 and 113 and the margin portions 114 and 115 may be configured similarly to the dielectric layer 111, other than the configuration in which the cover portions 112 and 113 and the margin portions 114 and 115 do not include an internal electrode.

The external electrodes 131 and 132 may be disposed on the third and fourth surfaces 3 and 4 of the body 110, and may extend to a portion of the first surface, second surface, fifth and sixth surfaces 1, 2, 5, and 6. Also, the external electrodes 131 and 132 may include a first external electrode 131 connected to the first internal electrodes 121 and a second external electrode 132 connected to the second internal electrode 122.

The external electrodes 131 and 132 may include first electrode layers 131a and 132a in contact with the internal electrodes 121 and 122 and second electrode layers 132a and 132b disposed on the first electrode layers 131a and 132a.

The first electrode layers 131a and 132a may include metal and glass. The first electrode layers 131a and 132a may be, for example, a sintered electrode. A metal included in the first electrode layers 131a and 132a may include Cu, Ni, Pd, Pt, Au, Ag, Pb, and/or alloys including the same, but an embodiment thereof is not limited thereto.

The second electrode layers 131b and 132b may improve mounting properties. The types of the second electrode layers 131b and 132b are not limited to any particular example, and may be plating layers including Ni, Sn, Pd, and/or alloys including the same, or may be formed in a plurality of layers. The second electrode layers 131b and 132b may be, for example, a Ni plating layer or a Sn plating layer, or may be formed by forming a Ni plating layer and a Sn plating layer in order. Also, the second electrode layers 131b and 132b may include a plurality of Ni plating layers and/or a plurality of Sn plating layers.

In the drawings, the multilayer electronic component 100 may have two external electrodes 131 and 132, but an embodiment thereof is not limited thereto, and the number of the external electrodes 131 and 132 and the shape thereof may be varied depending on the shape of the internal electrodes 121 and 122 or other purposes.

Hereinafter, the internal electrodes 121 and 122 of the multilayer electronic component 100 according to an embodiment will be described in greater detail with reference to FIGS. 4A to 7.

Referring to FIGS. 4A and 4B, the plurality of internal electrodes 121 and 122 may include main portions 121a and 122a and lead-out portions 121b and 122b extending from the main portions 121a and 122a toward the third surface 3 or the fourth surface 4 and having connection terminals E11 and E21 in contact with the external electrodes 131 and 132.

That is, the first internal electrode 121 may include the first main portion 121a and the first lead-out portion 121b extending from the first main portion 121a toward the third surface 3 and having the connection terminal E11 in contact with the first external electrode 131. For example, an outer edge of the first internal electrode 121 may have the connection terminal E11 in contact with the first external electrode 131, the end portion E12 of the first main portion 121a spaced apart from the first lead-out portion 121b, a side end portion E13 of the first lead-out portion 121b in the third direction, and a side end portion E14 of the first main portion 121a in the third direction.

The second internal electrode 122 may include the second main portion 122a and the second lead-out portion 122b extending from the second main portion 122a toward the fourth surface 4 and having the connection terminal E21 in contact with the second external electrode 132. For example, an outer edge of the second internal electrode 122 may include the connection terminal E21 in contact with the second external electrode 132, the end portion E22 of the second main portion 122a spaced apart from the second lead-out portion 122b, a side end portion E23 of the second lead-out portion 122b in the third direction, and a side end portion E24 of the second main portion 122a in the third direction.

The main portions 121a and 122a may have a flat shape perpendicular to the first direction. The main portions 121a and 122a may be spaced apart from the outer surface of the body 110. The main portions 121a and 122a may have a substantially rectangular shape. The side end portions E14 and E24 of the main portions 121a and 122a in the third direction may be substantially parallel to the fifth and sixth surfaces 5 and 6. The notion that the side end portions E14 and E24 of the main portions 121a and 122a in the third direction are substantially parallel to the fifth and sixth surfaces 5 and 6 may indicate that the side end portions E14 and E24 of the main portions 121a and 122a in the third direction and the fifth surface 5 or the sixth surface 6 may be completely parallel to each other, or that the angle formed by an extension line of the side end portions E14 and E24 of the main portions 121a and 122a in the third direction and the extension line of the fifth surface 5 or the sixth surface 6 may be 10° or lower, or 5° or lower. At least a portion of the first main portion 121a may overlap the second main portion 122a in the first direction, thereby forming capacitance of the multilayer electronic component 100. The lead-out portions 121b and 122b may be drawn out to the third surface 3 or the fourth surface 4 and may be spaced apart from the first surface, the second surface, the fifth and sixth surfaces 1, 2, 5, and 6. The lead-out portions 121b and 122b may connect the main portions 121a and 122a to the external electrodes 131 and 132.

Referring to FIG. 4C, a width W1 of the connection terminal in the third direction may be narrower than a width W2 of the main portion in the third direction. Accordingly, by reducing the exposed area of the internal electrodes 121 and 122, moisture resistance reliability of the multilayer electronic component 100 may be improved and cracks may be prevented in the body 110. Also, cracks (A/C cracks) between the capacitance formation portion Ac and the cover portions 112 and 113 may be prevented.

The ratio of W1 to W2, W1/W2, may not be limited to any particular example, and W1/W2 may be 0.4 or higher and 0.75 or lower. When W1/W2 exceeds 0.75, the effect of improving moisture resistance reliability and suppressing A/C cracks may be minimal. Also, when W1/W2 is less than 0.4, connectivity between the internal electrodes 121 and 122 and the external electrodes 131 and 132 may be reduced, which may be a side effect.

The lead-out portions 121b and 122b may have any shape as long as W1<W2 may be satisfied. However, in an embodiment, widths of the lead-out portions 121b and 122b in the third direction may gradually decrease from the main portions 121a and 122a to the connection terminals E11 and E21. That is, the width of the first lead-out portion 121b in the third direction may gradually decrease from the first main portion 121a toward the third surface 3, and the width of the second lead-out portion 122b in the third direction may gradually decrease from the second main portion 122a toward the fourth surface 4. For example, as illustrated in FIGS. 4A and 4B, the side end portions E13 and E23 of the lead-out portions 121b and 122b in the third direction may have a curved shape. For example, the side end portions E13 and E23 of the lead-out portions 121b and 122b in the third direction may have a convex shape toward a central portion of the body 110 in the third direction.

Referring to FIG. 4C, the body 110 may include a first corner portion C1 connecting the third surface 3 to the fifth surface 5, a second corner portion C2 connecting the third surface 3 to the sixth surface 6, a third corner portion C3 connecting the fourth surface 4 to the fifth surface 5, and a fourth corner portion C4 connecting the fourth surface 4 to the sixth surface 6. To prevent the corner portions C1, C2, C3, and C4 of the body 110 from breaking (chipping defective), the body 110 may be polished after sintering. Accordingly, each of the corner portions C1, C2, C3, and C4 may have a round shape.

In an embodiment, the connection terminals E11 and E21 may be spaced apart from the corner portions C1, C2, C3, and C4. The corner portions C1, C2, C3, and C4 of the body 110 may be vulnerable to permeation of external moisture. Accordingly, when the connection terminals E11 and E21 are in contact with the corner portions C1, C2, C3, and C4, moisture resistance reliability of the multilayer electronic component 100 may be deteriorated. Accordingly, the connection terminals E11 and E21 may be spaced apart from the corner portions C1, C2, C3, and C4.

Referring to FIGS. 4A to 5, in an embodiment, a radius of curvature Rc of the corner portions C1, C2, C3, and C4 may be greater than a distance Wm between the side end portions E14 and E24 of the main portions 121a and 122 in the third direction and the fifth surface 5 or the sixth surface 6. That is, in an embodiment, Rc > Wm may be satisfied. Wm may indicate a width of the margin portions 114 and 115 in the third direction. Rc and Wm may satisfy Rc > Wm, thereby preventing the margin portions 114 and 115 from being separated from the side surface of the capacitance formation portion Ac.

Rc may satisfy, for example, Rc ≤ 22 µm. When Rc exceeds 22 µm, the thickness of the external electrodes 131 and 132 on the corner portions C1, C2, C3, and C4 may excessively decrease. A lower limit of Rc may not be limited to any particular example, and may satisfy, for example, 6 um ≤ Rc. When Rc is less than 6 µm, chipping defects may occur.

For example, Wm may satisfy Wm ≤ 20 um. When Wm exceeds 20 µm, it may be difficult to implement miniaturization and high capacitance of the multilayer electronic component 100. A lower limit of Wm may not be limited to any particular example, and may satisfy, for example, 5 um ≤ Wm. When Wm is less than 5 µm, reliability of the multilayer electronic component 100 may be reduced.

Referring to FIGS. 6 and 7, in the case of the multilayer electronic component 100 according to an embodiment, the main portions 121a and 122a may include first saddle portions 21a and 22a disposed end portions E12 and E22 spaced apart from the lead-out portions 121b and 122b, and the lead-out portions 121b and 122b may include second saddle portions 21b, 22b disposed in the side end portions E13 and E23 in the third direction. The first saddle portions 21a and 22a and the second saddle portions 21b, 22b may have thicknesses in the first direction, greater than thicknesses of central portions of the main portions 121a and 122a in the second direction, respectively. That is, the first saddle portion 21a and the second saddle portion 21b of the first internal electrode 121 may have thicknesses greater than that of the central portion of the first main portion 121a in the second direction, and the first saddle portion 22a and the second saddle portion 22b of the second internal electrode 122 may have a thickness greater than that of the central portion of the second main portion 122a in the second direction.

As will be described later, when conductive paste for an internal electrode is printed on a ceramic green sheet to form an internal electrode pattern, an outer edge of the internal electrode pattern may have a thickness greater than that of the other portion. The first saddle portions 21a and 22a may be formed on the end portions E12 and E22 of the main portions 121a and 122a corresponding to the outer edge of the internal electrode pattern, spaced apart from the lead-out portions 121b and 122b, and the second saddle portions 21b and 22b may be formed on the side end portions E13 and E23 of the lead-out portions 121b and 122b in the third direction corresponding to the outer edge of the internal electrode pattern.

It may not be necessary to limit the thicknesses of the first saddle portions 21a and 22a and the second saddle portions 21b and 22b. For example, as illustrated in FIGS. 6 and 7, when a maximum thickness of the first saddle portions 21a and 22a in the first direction is defined as t1, a maximum thickness of the second saddle portions 21b and 22b in the first direction is defined as t2, and an average thickness in the first direction of the central portion of the main portions 121a and 122a in the second direction is defined as te, the ratio of t1 to te, t1/te, may be 1.045 or higher and 1.085 or lower. Also, the ratio of t2 to te, t2/te, may be 1.045 or higher and 1.085 or lower. It may not be necessary to limit te to any particular example, and te may be 0.1 µm or greater and 0.6 um or lower. Also, a length Ls1 of the first saddle portions 21a and 22a in the second direction and a length Ls2 of the second saddle portions 21b and 22b in the second direction may not be limited to any particular example, but Ls1 and Ls2 may be 70 um to 85 µm, respectively.

t1, t2, Ls1, and Ls2 may be measured in an image of a cross-section (e.g., the cross-section illustrated in FIG. 6) in the first and second directions, crossing the side end portions E13 and E23 of the lead-out portion in third direction, obtained using a scanning electron microscope (SEM). Each of t1, t2, Ls1 and Ls2 may indicate an average value of the values measured at 10 internal electrodes 121 and 122.

te may be measured in an image of a cross-section (e.g., the cross-section illustrated in FIG. 6) in the first and second directions, crossing the side end portions E13 and E23 in the third direction, obtained using a scanning electron microscope (SEM). More specifically, te may be measured by measuring thicknesses at a plurality of points disposed in a central portion of one of the main portions 121a and 122a in the second direction, for example, 30 points at an equal distance in the second direction, and obtaining the average value thereof. te may be further generalized by measuring the average value after performing the measurement of the average value on the 10 main portions 121a and 122a.

Referring to FIGS. 4C and 5, the lead-out portion of one internal electrode may have an overlap region Ro overlapping the main portion of a neighboring internal electrode among the plurality of internal electrodes in the first direction. For example, a portion of the first lead-out portion 121b may overlap the second main portion 122a in the first direction, and a portion of the second lead-out portion 122b may overlap the first main portion 121a in the first direction. For example, a maximum length of the first lead-out portion 121b in the second direction may be longer than a distance between the end portion E22 spaced apart from the second lead-out portion 122b of the second main portion 122a and the third surface 3, and the maximum length of the second lead-out portion 122b in the second direction may be longer than a distance between the end portion E12 spaced apart from the first lead-out portion 121b of the first main portion 121a and the fourth surface 4.

Accordingly, as illustrated in FIG. 6, in the cross-section of the body 110 in the first and second directions, passing through the region adjacent to the side end portions E14 and E24 of the main portions 121a and 122a in the third direction, ends of the first saddle portions 21a and 22a in the third direction of neighboring internal electrodes 121 and 122 in the first direction may not overlap ends of the second saddle portions 22b and 21b in the third direction of the neighboring internal electrodes 121 and 122 in the first direction among the plurality of internal electrodes. For example, in the cross-section of the body 110 in the first and second directions, passing through the region adjacent to the side end portions E14 and E24 of the main portions 121a and 122a in the third direction, the end of the first saddle portion 21a in the third direction of the first internal electrode 121 may not overlap the end of the second saddle portion 22b in the third direction of the neighboring second internal electrode 122 in the first direction, and the end of the first saddle portion 22a in the third direction of the second internal electrode 122 may not overlap the end of the second saddle portion 21b in the third direction of the neighboring first internal electrode 121 in the first direction.

FIG. 9 is a plan diagram illustrating a state in which a first internal electrode and a second internal electrode overlap each other in a comparative example, corresponding to FIG. 4C. FIG. 10 is a cross-sectional diagram illustrating a comparative example, corresponding to FIG. 6.

Referring to FIGS. 9 and 10, in comparative example, a first lead-out portion 121b' of the first internal electrode 121' may not overlap the second main portion 122a' of a second internal electrode 122' in the first direction. Also, a second lead-out portion 122b' of the second internal electrode 122' may not overlap a first main portion 121a' of a first internal electrode 121' in the first direction. In this case, in the cross-section of the body 110 in the first and second directions, passing through the region adjacent to the side end portions of the main portions 121a' and 122a' in the third direction, an end of a first saddle portion 21a', disposed on an end portion E12' of the first main portion 121a' spaced apart from the first lead-out portion 121b', and an end of a second saddle portion 22b', disposed at a side end portion E23' of the second lead-out portion 122b' in the third direction, may overlap each other in the first direction. Also, in the cross-section of the body 110 in the first and second directions, passing through the region adjacent to the side end portions of the main portions 121a' and 122a' in the third direction, an end of a first saddle portion 22a', disposed on an end portion E22' of the second main portion 122a' spaced apart from the second lead-out portion 122b', and an end of a second saddle portion 21b', disposed at a side end portion E13' of the first lead-out portion 121b' in the third direction, may overlap each other in the first direction.

As illustrated in FIG. 10, in the comparative example, a region in which the first saddle portions 21a' and 22a' and the second saddle portions 22b' and 21b' overlap each other in the first direction, that is, a region in which a thickness of a dielectric layer 111 locally decreases, may increase such that insulation breakdown voltage properties of the multilayer electronic components may be degraded. In the embodiments of the present disclosure (e.g., FIG. 6), the region in which the first saddle portions 21a and 22a and the second saddle portions 22b and 21b overlap each other in the first direction, that is, the region in which the thickness of the dielectric layer 111 locally decreases, may be relatively reduced compared to the comparative example, and accordingly, deterioration of insulation breakdown voltage properties of the multilayer electronic component 100 may be prevented.

It may not be necessary to limit a length of the overlap region Ro. However, referring to FIG. 5, when a maximum length of the overlap region Ro in the second direction is defined as Lo, Lo may be 25 um or greater. When Lo is less than 25 um, the effect of improving insulation breakdown voltage (BDV) properties in the embodiments may be minimal. An upper limit of Lo may not be limited to any particular example, and may be, for example, 75 um or lower. When Lo exceeds 75 um, the length of the main portion in the second direction may be reduced, and the area of the non-overlap region Rn, which will be described later, may increase, such that capacitance of the multilayer electronic component 100 may be degraded, which may be the side effect.

Referring to FIG. 5, when the region of the lead-out portion 121b other than the overlap region Ro is defined as a margin region Rm, a maximum length Lm of the margin region Rm in the second direction may be 5 um or greater and 45 um or lower. When Lm is less than 5 um, a moisture penetration path of external moisture into the internal electrode may be shortened such that moisture resistance reliability of the multilayer electronic component 100 may decrease. Also, when Lm exceeds 45 um, the overlap region Ro may decrease such that capacitance of the multilayer electronic component 100 may decrease.

Referring to FIGS. 4A to 5, the main portions 121a and 122a may include a non-overlap region Rn not overlapping neighboring internal electrodes among the plurality of internal electrodes 121 and 122 in the first direction. The non-overlap region Rn may be disposed on both ends of the end portions E12 and E22 of the main portions 121a, 122a in the third direction spaced apart from the lead-out portions 121b and 122b. That is, each of the first main portion 121a and the second main portion 122a may have two non-overlap regions Rn.

In an embodiment, the area ratio of the non-overlap region Rn to the entire area of the main portions 121a and 122a may be 0.8% or higher and 1.5% or lower. That is, the ratio of the area of the two non-overlap regions Rn included in the first main portion 121a to the entire area of the first main portion 121a may be 0.8% or higher and 1.5% or lower, and the ratio of the area of the two non-overlap regions Rn included in the second main portion 122a to the entire area of the second main portion 122a may be 0.8% or higher and 1.5% or lower. When the area ratio of the non-overlap region Rn to the entire area of the main portions 121a and 122a is less than 0.8%, the effect of improving insulation breakdown voltage properties in the embodiments may be minimal. When the area ratio of the non-overlap region Rn to the entire area of the main portions 121a and 122a is greater than 1.5%, capacitance of the multilayer electronic component 100 may be degraded, which may be the side effect.

W1, W2, Rc, Wm, Lo, Lm and the area ratio of the non-overlap region Rn may be measured in an image of a cross-sections of the multilayer electronic component 100 in the second and third direction, passing through a center of the body 110 in the first direction, obtained using a scanning electron microscopy (SEM). Rc may indicate the average value after measuring radii of curvature in the first to fourth corner portion C1, C2, C3, and C4. Wm may indicate the average value of the widths of the margin portions 114 and 115 in the third direction, measured at five points at equal distance in the second direction. Also, Wm may indicate each of the average width of the first margin portions 114 and second margin portions 115 in the third direction.

It may not be necessary to specifically limit the size of the multilayer electronic component 100. For example, the maximum length of the multilayer electronic component 100 in the second direction may be 0.6mm to 1.6mm, and the maximum width of the multilayer electronic component 100 in the third direction may be 0.3mm to 0.8mm, but an embodiment thereof is not limited thereto.

The average thickness of the dielectric layer 111 may not be limited to any particular example. However, to implement miniaturization and high capacitance of the multilayer electronic component 100, the average thickness of the dielectric layer 111 may be 0.1 um or greater and 0.6 um or lower. The average thickness of the dielectric layer 111 may indicate the size of the dielectric layer 111 in the first direction. The average thickness of the dielectric layer 111 may be measured by scanning the cross-sections of the body 110 in the first and second directions using a scanning electron microscope (SEM) at 10,000 magnification. More specifically, the average thickness of the dielectric layer 111 may be measured by measuring thicknesses at multiple points of the dielectric layer 111, for example, 30 points at an equal distance in the second direction, and obtaining the average value thereof. The 30 points may be designated, for example, in a central portion in the second direction of the main portions 121a and 122a. By measuring the average value by performing the measurement of the average value on 10 dielectric layers 111, the average thickness of the dielectric layer 111 may be further generalized.

The average thickness of the cover portions 112 and 113 may not be limited to any particular example. However, to implement miniaturization and high capacitance the multilayer electronic component, the average thickness of the cover portions 112 and 113 may be 20 um or lower, but an embodiment thereof is not limited thereto. Here, the average thickness of the cover portions 112 and 113 may indicate the average thickness of each of the first cover portions 112 and the second cover portions 113. The average thickness tc of the cover portions 112 and 113 may indicate the average size of the cover portions 112 and 113 in the first direction, and may be an average value of the sizes in the first direction, measured at five points at an equal distance in the second direction in the cross-section of the body 110 in the first and second directions passing through the center in the third direction of the body 110.

Hereinafter, an example of a method of manufacturing a multilayer electronic component 100 according to an embodiment may be described with reference to FIG. 8.

First, a ceramic green sheet 211 may be prepared by preparing a ceramic slurry including ceramic powder, an organic solvent and a binder, and applying the slurry on a carrier film and drying the slurry. The ceramic green sheet 211 may form a dielectric layer 111 by sintering. The ceramic powder is not limited to any particular example as long as sufficient electrostatic capacitance may be obtained, but for example, a barium titanate material, a lead composite perovskite material, or a strontium titanate material may be used. Examples of the ceramic powder may include, BaTiO₃, (Ba₁₋ₓCaₓ) TiO₃ (0<x<1), Ba (Ti_{1-y}Ca_{y}) O₃ (0<y<1), (Ba₁₋ₓCaₓ)(Ti_{1-y}Zr_{y}) O₃ (0<x<1, 0<y<1) or Ba(Ti_{1-y}Zr_{y})O₃ (0<y<1) in which Ca (calcium) and Zr (zirconium) are partially dissolved in BaTiO₃. Ethanol may be used as the organic solvent, polyvinyl butyral may be used as the binder, and generally used materials may be used as the organic solvent and binder.

Thereafter, the first internal electrode pattern 221 or the second internal electrode pattern 222 may be printed on the ceramic green sheet 211. The internal electrode patterns 221 and 222 may form internal electrodes 121 and 122 by sintering. The internal electrode patterns 221 and 222 may be formed by printing a conductive paste for an internal electrode including metal powder, binder, solvent, or the like, on the ceramic green sheet 211 using a screenprinting method or a gravure printing method.

Specifically, a plurality of first internal electrode patterns 221 disposed at a predetermined distance may be formed on the first ceramic green sheet. The plurality of first internal electrode patterns 221 may have a band shape and may be formed parallel to each other. Also, a plurality of second internal electrode patterns 222 disposed at a predetermined distance may be formed on the second ceramic green sheet. The plurality of second internal electrode patterns 222 may have a band shape and may be formed parallel to each other.

Thereafter, a plurality of hole portions 205 may be formed in the first internal electrode pattern 221, and a plurality of hole portions 206 may be formed in the second internal electrode pattern 222. The hole portions 205 and 206 may indicate a region in which an internal electrode pattern is not formed. The hole portions 205 and 206 may be divided into two portions by a first cutting line CL1 parallel to the width direction (the third direction), and may be divided into two portions by a second cutting line CL2 parallel to the length direction (the second direction). The shape of the hole portions 205 and 206 may not be limited to any particular example, and the hole portions 205 and 206 may have a circular or elliptical shape to prevent issues such as printing bleeding. A maximum length of the hole portions 205 and 206 in the second direction may be longer than a distance between the internal electrode patterns 221 and 222 in the second direction preferably.

Each of outer edges 201 and 202 of the first internal electrode pattern 221 and outer edges 203 and 204 of the second internal electrode pattern 222 illustrated in FIG. 8 may have a saddle shape having a thickness greater than those of the other portions of the internal electrode patterns 221 and 222.

The outer edges 201 and 202 of the first internal electrode pattern 221 and the outer edges 203 and 204 of the second internal electrode pattern 222 may correspond to end portions E12 and E22 of the main portions 121a and 122a spaced apart from the lead-out portions 121b and 122b, respectively. That is, the first saddle portions 21a and 22a illustrated in FIG. 6 may be derived from the outer edges 201 and 202 of the first internal electrode pattern 221 and the outer edges 203 and 204 of the second internal electrode pattern 222.

Also, each of the outer edges of the hole portions 205 and 206 illustrated in FIG. 8 may have a saddle shape having a thickness greater than those of the other portions of the internal electrode patterns 221 and 222.

The outer edge of the hole portion 205 of the first internal electrode pattern 221 and the outer edge of the hole portion 206 of the second internal electrode pattern 222 may correspond to the side end portions E13 and E23 of the lead-out portions 121b and 122b in the third direction. That is, the second saddle portions 21b and 22b illustrated in FIG. 6 may be derived from the outer edges of the hole portions 205 and 206 of the internal electrode patterns 221 and 222.

Thereafter, a ceramic laminate may be formed by alternately laminating the first ceramic green sheet on which the first internal electrode pattern 221 illustrated in FIG. 8 is printed and the second ceramic green sheet on which the second internal electrode pattern 222 is printed. A predetermined number of sheets for forming the cover portions on which an internal electrode pattern is not printed may be laminated on upper and lower portions of the ceramic laminate. The sheet for forming cover portions may form cover portions 112 and 113 by sintering.

Thereafter, the ceramic laminate may be compressed, and ceramic chips may be obtained by cutting along the cutting lines CL1 and CL2. Thereafter, sheets for forming margin portions may be attached to both side surfaces of the ceramic chip in the third direction. The sheet for forming margin portions may form margin portions 114 and 115 by sintering.

Thereafter, by sintering the ceramic chip to which the sheet for forming the margin portions is attached, the body 110 including the dielectric layer 111 and the internal electrodes 121 and 122 illustrated in FIGS. 1 to 3 may be formed. The sintering temperature for forming the body 110 may not be limited to any particular example, and may be, for example, 1100°C or higher and 1300°C or lower. Thereafter, a barrel polishing process may be performed to allow each of the corner portions C1, C2, C3, and C4 of the body 110 to have a rounded shape.

Thereafter, external electrodes 131 and 132 may be formed. The first electrode layers 131a and 132a may be formed by dipping the body 110 in conductive paste including metal powder and glass and performing sintering. The sintering temperature for forming the first electrode layers 131a and 132a may not be limited to any particular example, and may be, for example, 700°C to 900°C.

Thereafter, second electrode layers 131b and 132b may be formed on the first electrode layers 131a and 132a. The method of forming the second electrode layers 131b and 132b may not be limited to any particular example, and for example, electrolytic plating and/or electroless plating may be used.

However, the above-described manufacturing method is merely an example, and the method of manufacturing the multilayer electronic component 100 is not limited to the above-described manufacturing method.

### (Experimental example)

A sample chip was prepared through the manufacturing method described above. Specifically, a ceramic green sheet was manufactured using a ceramic slurry including BaTiO₃ powder, and an internal electrode pattern was printed on the ceramic green sheet using conductive paste for an internal electrode including Ni powder. Also, the first metal layer of the sample chip was formed using conductive paste including Cu powder, and in the second metal layer of the sample chip, a Ni plating layer and a Sn plating layer were laminated in order.

The sample chip was manufactured to have the 1005 size (length: approximately 1.0 mm, width: approximately 0.5 mm, thickness: approximately 0.5 mm), the width W2 of the main portion was 600 µm, a distance Wm between the side end portion of the main portion in the third direction and the fifth or sixth surface was about 14 µm, a radius of curvature Rc of the corner portion was about 15 µm, and the maximum length Lm of the margin region was about 40 µm.

Thereafter, 10 sample chips were prepared for each sample No., and the cross-sections in the second and third direction, polished to the central portion of each sample chip in the first direction, were observed by an optical microscope (OM) at a magnification of 500 times or higher. Thereafter, Lo was measured on the side end portion of four lead-out portions in the third direction, and the average value thereof was calculated. The average value was measured on 10 sample chips, and the final average value is listed in Table 1 below. Similarly, W1 and W2 were measured on 10 sample chips, and the average values are listed in Table 1 below. As for sample Nos. 1 to 3 in which Lo was 0 µm, no overlap region is present as illustrated in the comparative examples illustrated in FIGS. 9 and 10.

Thereafter, cracks (A/C cracks) between the capacitance formation portion and the cover portions was observed for the sample chip of each sample No. 50 sample chips were prepared for each test No., the cross-section in the first and second directions, passing through the center of the sample chip in the third direction was observed, and when any sample chip had peeling of 100 nm or higher between the capacitance formation portion and the cover portions, the sample chip was determined as "defective" (NG), and when peeling did not occur, the sample chip was determined as "normal" (OK).

Also, for each sample No., the average value of the insulation breakdown voltage, the standard deviation (Stdv) of the insulation breakdown voltage, and the coefficient of variation (CV) of the insulation breakdown voltage were measured under the conditions of a voltage increase speed of 20V/sec and a current limit of 20mA. Thereafter, when the average value of the insulation breakdown voltage satisfied 90V or higher, the standard deviation of the insulation breakdown voltage satisfied 12V or lower, and the coefficient of variation of the insulation breakdown voltage satisfied 12.5% or lower, the sample was determined as "normal" (OK), and at least one condition was not satisfied, the sample was determined as "defective" (NG).

**[Table 1]**

| No. | W1 (µm) | W1/W2 | Lo (µm) | Average BDV (V) | Stdv (V) | CV (%) | Determination (CRACK/BDV) |
|---|---|---|---|---|---|---|---|
| 1 | 240 | 0.40 | 0 | 84.2 | 16.6 | 19.7 | OK / NG |
| 2 | 450 | 0.75 | 0 | 86.4 | 15.2 | 17.6 | OK / NG |
| 3 | 510 | 0.85 | 0 | 87.9 | 14.8 | 16.8 | NG / NG |
| 4 | 240 | 0.40 | 25 | 97.4 | 9.6 | 9.9 | OK / OK |
| 5 | 450 | 0.75 | 25 | 96.1 | 10.9 | 11.3 | OK / OK |
| 6 | 510 | 0.85 | 25 | 94.8 | 11.8 | 12.4 | NG / OK |
| 7 | 240 | 0.40 | 50 | 99.8 | 8.5 | 8.5 | OK / OK |
| 8 | 450 | 0.75 | 50 | 97.6 | 9.8 | 10.0 | OK / OK |
| 9 | 510 | 0.85 | 50 | 96.1 | 11.2 | 11.7 | NG / OK |
| 10 | 240 | 0.40 | 75 | 96.6 | 8.9 | 9.2 | OK / OK |
| 11 | 450 | 0.75 | 75 | 95.7 | 11.6 | 12.1 | OK / OK |
| 12 | 510 | 0.85 | 75 | 97.8 | 9.7 | 9.9 | NG / OK |

Referring to Table 1, in sample Nos. 3, 6, 9, and 12 in which W1/W2 ratio was greater than 0.75, A/C cracks occurred. Also, sample Nos. 1 to 3 in which the lead-out portion did not have an overlap region, insulation breakdown voltage properties were degraded.

According to the aforementioned embodiments, a multilayer electronic component having improved reliability may be provided.

The embodiments do not necessarily limit the scope of the embodiments to a specific embodiment form. Instead, modifications, equivalents and replacements included in the disclosed concept and technical scope of this description may be employed. Throughout the specification, similar reference numerals are used for similar elements.

In the embodiments, the term "embodiment" may not refer to one same embodiment, and may be provided to describe and emphasize different unique features of each embodiment. The suggested embodiments may be implemented do not exclude the possibilities of combination with features of other embodiments. For example, even though the features described in an embodiment are not described in the other embodiment, the description may be understood as relevant to the other embodiment unless otherwise indicated.

The terms "first," "second," and the like may be used to distinguish one element from the other, and may not limit a sequence and/or an importance, or others, in relation to the elements. In some cases, a first element may be referred to as a second element, and similarly, a second element may be referred to as a first element without departing from the scope of right of the example embodiments.

While the embodiments have been illustrated and described above, it will be configured as apparent to those skilled in the art that modifications and variations could be made without departing from the scope of the present disclosure as defined by the appended claims.

## Claims

1. A multilayer electronic component, comprising:
a body including a dielectric layer and a plurality of internal electrodes disposed alternately with the dielectric layer in a first direction, the body including a first surface and a second surface opposing each other in the first direction, a third surface and a fourth surface connected to the first and second surfaces and opposing each other in a second direction, and a fifth surface and a sixth surface connected to the first to the fourth surfaces and opposing each other in a third direction; and
external electrodes disposed on the third and fourth surfaces,
wherein the plurality of internal electrodes each include a main portion and a lead-out portion extending from the main portion toward the third surface or the fourth surface, the lead-out portion having a connection terminal in contact with a corresponding one of the external electrodes,
wherein a width of the lead-out portion in the third direction gradually decreases from the main portion to the connection terminal,
wherein the main portion includes a first saddle portion disposed on an end portion of the main portion spaced apart from the lead-out portion, and the lead-out portion includes a second saddle portion disposed on a side end portion of the lead-out portion in the third direction,
wherein thicknesses of the first and second saddle portions in the first direction are greater than a thickness of a central portion in the second direction of the main portion, and
wherein the lead-out portion of one internal electrode has an overlap region overlapping the main portion of a neighboring internal electrode among the plurality of internal electrodes in the first direction.

2. The multilayer electronic component of claim 1, wherein, when a width of the connection terminal in the third direction is defined as W1 and a width of the main portion in the third direction is defined as W2, W1/W2 is 0.4 or higher and 0.75 or lower.

3. The multilayer electronic component of claim 1, wherein, when a maximum length of the overlap region in the second direction is defined as Lo, Lo is 25 um or greater and 75 um or lower.

4. The multilayer electronic component of claim 1, wherein, when a maximum thickness of the first saddle portion in the first direction is defined as t1 and an average thickness of the central portion in the second direction of the main portion is defined as te, a ratio of t1 to te, t1/ te, is 1.045 or higher and 1.085 or lower.

5. The multilayer electronic component of claim 1, wherein, when a region of the lead-out portion other than the overlap region is defined as a margin region, a maximum length of the margin region in the second direction is 5 um or greater and 45 um or lower.

6. The multilayer electronic component of claim 1, wherein the side end portion in the third direction of the lead-out portion has a curved shape.

7. The multilayer electronic component of claim 1,
wherein the main portion of one internal electrode includes a non-overlap region not overlapping a neighboring internal electrode among the plurality of internal electrodes in the first direction, and
wherein an area ratio of the non-overlap region to an entire area of the main portion is 0.8% or higher and 1.5% or lower.

8. The multilayer electronic component of claim 7, wherein the non-overlap region is disposed on both ends in the third direction of the end portion of the main portion spaced apart from the lead-out portion.

9. The multilayer electronic component of claim 1,
wherein the body has a corner portion connecting the third surface to the fifth surface, connecting the third surface to the sixth surface, connecting the fourth surface to the fifth surface, and connecting the fourth surface to the sixth surface, the corner portion having a rounded shape, and
wherein the connection terminal is spaced apart from the corner portion.

10. The multilayer electronic component of claim 9, wherein, when a radius of curvature of the corner portion is defined as Rc, and a distance between a side end portion in the third direction of the main portion and the fifth or sixth surface of the body is defined as Wm, Rc and Wm satisfy Rc > Wm.

11. The multilayer electronic component of claim 10, wherein Rc and Wm satisfy Rc ≤ 22 um and Wm ≤ 20 µm.

12. The multilayer electronic component of claim 1, wherein in the cross-section of the body in the first and second directions, passing through a region adjacent to a side end portion in the third direction of the main portion, one end of the first saddle portion in the third direction of one internal electrode does not overlap one end of the second saddle portion in the third direction of a neighboring internal electrode among the plurality of internal electrodes in the first direction.

13. A multilayer electronic component, comprising:
a body including a dielectric layer and a plurality of internal electrodes disposed alternately with the dielectric layer in a first direction, the body including a first surface and a second surface opposing each other in the first direction, a third surface and a fourth surface connected to the first and second surfaces and opposing each other in a second direction, and a fifth surface and a sixth surface connected to the first to the fourth surfaces and opposing each other in a third direction; and
external electrodes disposed on the third and fourth surfaces,
wherein the plurality of internal electrodes each include a main portion and a lead-out portion extending from the main portion toward the third or fourth surface, the lead-out portion having a connection terminal in contact with a corresponding one of the external electrodes,
wherein a width of the lead-out portion in the third direction gradually decreases from the main portion to the connection terminal,
wherein the lead-out portion of one internal electrode has an overlap region overlapping the main portion of a neighboring internal electrode among the plurality of internal electrodes in the first direction, and
wherein, when a width of the connection terminal in the third direction is defined as W1 and a width of the main portion in the third direction is defined as W2, W1/W2 is 0.4 or higher and 0.75 or lower.

14. The multilayer electronic component of claim 13, wherein, when a maximum length of the overlap region in the second direction is defined as Lo, Lo is 25 um or greater and 75 um or lower.

15. The multilayer electronic component of claim 13,
wherein the main portion of one internal electrode includes a non-overlap region not overlapping a neighboring internal electrode among the plurality of internal electrodes in the first direction, and
wherein an area ratio of the non-overlap region to an entire area of the main portion is 0.8% or higher and 1.5% or lower.
